# EUROPEAN PATENT SPECIFICATION

(11) **EP 3 373 065 B1**
(45) Date of publication and mention of the grant of the patent: **29.04.2020**
(21) Application number: 17746792.5
(22) Date of filing: 19.01.2017
(51) Int. Cl.: G02F 1/39, H04B 10/297, H04B 10/25

(54) **HIGH-PRECISION OPTICAL FIBER TIME TRANSMISSION BI-DIRECTIONAL OPTICAL AMPLIFICATION METHOD AND DEVICE**
BIDIREKTIONALES OPTISCHES AMPLIFIKATIONSVERFAHREN UND VORRICHTUNG FÜR HOCHGENAUE GLASFASERZEITÜBERTRAGUNG
DISPOSITIF ET PROCÉDÉ D'AMPLIFICATION OPTIQUE BIDIRECTIONNELLE DE TRANSMISSION TEMPORELLE DE FIBRE OPTIQUE À HAUTE PRÉCISION

(30) Priority: 02.02.2016 CN 201610073321
(43) Date of publication of application: 12.09.2018
(73) Proprietor: Shanghai Jiao Tong University, Shanghai 200240 (CN)
(72) Inventor: WU, Guiling, Shanghai 200233 (CN); ZHANG, Hao, Shanghai 200233 (CN); CHEN, Jianping, Shanghai 200233 (CN)
(74) Representative: Rössler, Matthias
(86) International application number: PCT/CN2017/071672
(87) International publication number: WO 2017/133472

(56) References cited:
- CN-A- 1 330 463
- CN-A- 104 506 269
- CN-A- 105 739 215
- US-A1- 2007 258 432
- UKASZ SLIWCZYNSKI ET AL: "Bidirectional Optical Amplification in Long-Distance Two-Way Fiber-Optic Time and Frequency Transfer Systems", IEEE TRANSACTIONS ON INSTRUMENTATION AND MEASUREMENT, IEEE SERVICE CENTER, PISCATAWAY, NJ, US, vol. 62, no. 1, 1 January 2013 (2013-01-01), pages 253-262, XP011522684, ISSN: 0018-9456, DOI: 10.1109/TIM.2012.2212504
- WANG, LINGDONG ET AL.: 'Simultaneous transfer of time and frequency over 100 km fibre link' ACTA OPTICA SINICA vol. 35, no. 4, 30 April 2015, pages 1 - 7, XP009507386
- LI, XIAOYA ET AL.: 'Study on high precision disciplined time-frequency transferring experiments through optical fibre link' vol. 34, 31 May 2014, pages 0506004 - 1-0506004-6, XP009507392
- Z HANG, HAO ET AL.: 'High-Precision Time Transfer Over 2000-km Fiber Link' IEEE PHOTONICS JOURNAL vol. 7, no. 6, 31 December 2015, pages 1 - 9, XP011590804

## Description

### Field of technology

The present invention relates to a method and a realizing device for optical amplification in field of fiber-optic time and frequency transfer, particularly, a method and a device for optical amplification in high-precision bidirectional fiber-optic time transfer.

### Background Art

High-precision time transfer technology finds valuable and important applications in the fields of satellite navigation, aerospace industry, deep space exploration, geodesy, and tests of fundamental physics. The current satellite-based time transfer technologies, such as GPS common view (CV) and two-way satellite time transfer (TWSTFT), have a precision at the level of nanosecond. With the invention and application of clock sources with high stability and low uncertainty, such as optical lattice clock, the above mentioned technologies can no longer meet the needs of scientific research and social development. A technology of time transfer by laser link (T2L2) with a theoretical uncertainty of better than lOOps is currently still in development. Furthermore, although the aforesaid space-based time transfer technology has been proved to be quite mature and feasible, it has disadvantages such as complex system, high cost, long averaging time, poor security, low reliability and so on. Fiber-optic transmission has the advantages of low loss, large capacity, high speed, high stability, safety and reliability. It has been widely used in the field of communications. Using the existing widely installed fiber-optic communication networks, fiber-optic time transfer is an effective way to realize high-precision long-distance time transfer.

High-precision fiber-optic time transfer is faced with the problem that the transmission delay of the fiber link changes with changes in temperature, stress, transmission wavelength and other factors. To realize high-precision time transfer, bidirectional time transfer method is widely adopted at present. For long-distance bidirectional fiber-optic time transfer, bidirectional optical amplification must be performed to compensate the attenuation of optical signal. However, unidirectional optical transmission and amplification technologies are used in existing fiber-optic communication networks. Bidirectional optical amplification has become one of the key technologies for realizing high-precision bidirectional time transfer in conventional communication networks. AGH university of Poland proposed a single fiber bidirectional optical amplifier [1], where bidirectional amplification of single fiber can be realized by replacing isolators at either end of the unidirectional EDFA with filter to ensure the bidirectional propagation delay symmetry. However, serious noise accumulation caused by multiple optical amplifications, such as Rayleigh backscattering around optical amplifiers, will seriously deteriorate the signal-to-noise ratio and limit the total length of fiber-optic link [2].National Metrology Institute of Japan (NMIJ) [3] brought forward a bidirectional optical amplification scheme for wavelength division multiplexing (WDM) fiber-optic time transfer scheme. Using WDM to separate and combine wavelengths from two directions, isolators inserted can suppress multiple amplifications of noises such as Rayleigh backscattering. Nevertheless, the improvement of signal-to-noise ratio in the scheme is at the expense of the bidirectional transmission delay asymmetry. The asymmetry has to be calibrated and the total calibrating error increases linearly with the increase of the number of amplifiers. The CESNET *et al.* [4] in Czech used distributed Raman amplifier to carry out optical amplification of time signal for bidirectional transmission. Although the bidirectional symmetry of the time delay of fiber-optic time transfer link can be ensured, the noise such as Rayleigh scattering can also be multiple optically amplified. Moreover, there are other problems such as high pump power, low efficiency, dependence on the polarization of the input optical signal, and so on. Besides, the upgrade of optical amplification equipment in the existing fiber-optic communication network to implement above schemes will greatly increase implementation and operation cost of fiber-optic time transfer system.
[1] L. Śliwczyński, P. Krehlik, A. Czubla, L. Buczek, and M. Lipiński, "Dissemination of time and RF frequency via a stabilized fibre optic link over a distance of 420 km," Metrologia, vol. 50, pp. 133-145, 2013.
[2] L. Śliwczyński and J. Kolodziej, "Bidirectional Optical Amplification in Long-Distance Two-Way Fiber-Optic Time and Frequency Transfer Systems," Instrumentation and Measurement, vol. 62, pp. 253 - 262, 2013.
[3] M. Amemiya, M. Imae, Y. Fujii, T. Suzuyama, F.-L. Hong, and M. Taka-moto, "Precise frequency comparison system using bidirectional optical amplifiers," Instrumentation and Measurement, IEEE Transactions on, vol. 59, pp. 631-640, 2010.
[4] J. Vojt 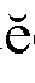 ch, V. Smotlacha, and J. Radil, "All optical two-way time transfer in strongly heterogeneous networks," in Proc. of SPI, 2014, pp. 92020S-92020S-6.

### Summary of the invention

The present invention overcomes the deficiency in prior art by providing a bidirectional fiber-optic amplification method and devices for a high-precision fiber-optic time transfer scheme based on bidirectional time division multiplexing transmission over a single fiber with the same wavelength. The present invention separates the time transfer channel from fiber-optic wavelength channels by wavelength division multiplexing, makes forward and backward transmission optical signals fortime transfer pass through the unidirectional optical amplifier at different times by the control of the 2x2 optical switch to realize same fiber and wavelength bidirectional amplification of the optical signal carrying the timing signal. The compatibility with unidirectional amplification technology in the existing fiber-optic communication network can be realized while ensuring the bidirectional symmetry of time delay of fiber-optic transfer link and effectively suppressing multiple amplifications of noises such as Rayleigh backscattering.

The technical solution of present invention is as follows:
A device for bidirectional optical amplification in high-precision fiber-optic time transfer, comprising the first wavelength separator/combiner, the wavelength combiner, the wavelength separator, the second wavelength separator/combiner, the first optical splitter, the second splitter, the control unit, the 2x2 optical switch and the unidirectional optical amplifier;
The combining port of the first wavelength separator/combiner is connected to fiber-optic link, one splitting port is connected to the splitting port of the wavelength channel corresponding to the wavelength combiner via unidirectional transmission wavelength channel, and the other splitting port is connected to the junction of the first optical splitter via bidirectional transmission wavelength channel;
The combining port of the wavelength combiner is connected to the input port of the unidirectional optical amplifier, and the output port of the unidirectional optical amplifier is connected to the combining port of the wavelength separator;
The combining port combining port of the second wavelength separator/combiner is connected to fiber-optic link, one splitting port is connected to the splitting port of the wavelength channel corresponding to the wavelength separator via unidirectional transmission wavelength channel, and the other splitting port is connected to the junction of the second optical splitter via bidirectional transmission wavelength channel;
The input ports of the control unit are respectively connected to the shunt terminal of the first optical splitter and the shunt terminal of the second optical splitter, and the control output port of the control unit is connected to the control input port of the 2x2 optical switch;
The port 1 of the 2x2 optical switch is connected to the other shunt terminal of the first optical splitter, the port 2 of the 2x2 optical switch is connected to the other shunt terminal of the second optical splitter, the port 3 of the 2x2 optical switch is connected to the other splitting port of the wavelength combiner, and the port 4 of the 2x2 optical switch is connected to the other splitting port of the wavelength separator;
Further, the optical signal input from the combining port combining port of the first wavelength separator/combiner is split into two parts. One is carrying timing signal, which is transferred along the bidirectional time transfer channel. And the other optical signal is transferred along unidirectional transmission wavelength channel. Then the forward optical signal carrying timing signal is split into two parts by the first optical splitter. One part enters the control unit, according to which the control unit confirms time t₁₁ and sets the state of the 2x2 optical switch to be state I. Then the other part passes through the port 1 of the 2x2 optical switch, the port 4 of the 2x2 optical switch, the wavelength combiner, the unidirectional optical amplifier, the wavelength separator, the port 3 of the 2x2 optical switch, the port 2 of the 2x2 optical switch, the second optical splitter and the second wavelength separator/combiner in turn. After that, this forward optical signal is outputted to fiber-optic link by the combining port combining port of the second wavelength separator/combiner.
The backward optical signal carrying timing signal inputted from the combining port combining port of the second wavelength separator/combiner is transferred along bidirectional time transfer channel and split into two channels by the second optical splitter, one channel enters the control unit, according to which the control unit confirms time t₂₁ and sets the state of the 2x2 optical switch to be II. Then the other backward optical signal is made to pass through the port 2 of the 2x2 optical switch, the port 4 of the 2x2 optical switch, the wavelength combiner, the unidirectional optical amplifier, the wavelength separator, the port 3 of the 2x2 optical switch, the port 1 of the 2x2 optical switch, the first optical splitter and the first wavelength separator/combiner in turn. After that, this backward optical signal is outputted to the fiber-optic link by the combining port combining port of the first wavelength separator/combiner.
The other optical signal transmitted along unidirectional transmission wavelength channel passes through the wavelength combiner, the unidirectional optical amplifier, the wavelength separator, and the second wavelength separator/combiner in turn. After that, this optical signal is outputted to fiber-optic link by the combining port combining port of the second wavelength separator/combiner.

The state I of the 2x2 optical switch means that the port 1 and the port 4 of the 2x2 optical switch are connected and the port 2 and 3 of the 2x2 optical switch are connected. The state II of the 2x2 optical switch is when the port 1 and the port 3 of the 2x2 optical switch are connected and the port 2 and 4 of the 2x2 optical switch are connected.

On the other hand, the present invention also discloses a method for optical amplification in high-precision bidirectional fiber-optic time transfer. The optical signal for bidirectional time transfer is selected from the optical carriers along the fiber-optic transfer path through the wavelength separator/combiner. By controlling the 2x2 optical switch, the optical signals transferred forth and back in the bidirectional time transmission channel pass through the unidirectional optical amplifier at different times. The other unidirectional optical signals are also amplified in the amplifier. Therefore, the optical amplification for the time signal carrying timing signal transferred bidirectionally over a single fiber with the same wavelength in bidirectional time division multiplexing fiber-optic time transfer link, as well as other unidirectional transmission wavelength channels is realized.

The amplification process of the forward optical signal and the backward optical signal carrying timing signal is as follows:
1) The forward optical signal is split into a forward optical signal carrying timing signal and the other optical signals, which are transferred along unidirectional transmission wavelength channel by the first wavelength separator/combiner. Then the forward optical signal carrying timing signal is input into the first optical splitter, and the other optical signals transferred along unidirectional transmission wavelength channel are input into the corresponding wavelength input port of the wavelength combiner.
2) A portion of the forward optical signal carrying timing signal is inputted into the control unit and another portion of the forward optical signal is inputted into the 2x2 optical switch by the first optical splitter.
3) The control unit determines the time t₁₁ as the next time to set the 2x2 optical switch to state I based on the time t₁ when it detected the forward optical signal and the transfer direction of the forward optical signal. t₁₁ < t₁+T-tₛ, where T is the period of the transferred timing signal, and tₛ is the switching time of the optical switch. When the set time t₁₁ is reached, the 2x2 optical switch is set and maintained in state I to enable the forward optical signal carrying timing signal to enter into the wavelength combiner through the 2×2 optical switch.
4) The wavelength combiner combines the forward optical signal passed through the 2x2 optical switch and the other optical signal outputted by the other splitting port of the first wavelength separator/combiner into one optical signal, then the combined optical signal is inputted into the unidirectional optical amplifier to perform optical amplification.
5) The optical signal amplified and outputted by the unidirectional optical amplifier is again splitting to a forward optical signal carrying timing signal and other optical signal transferred along unidirectional transmission wavelength channel through the wavelength separator. The forward optical signal carrying timing signal passes through the2x2 optical switch, which is still maintained in state I, and the second optical splitter. Then the forward optical signal enters into the second wavelength separator/combiner, followed by being combined with other optical signal outputted from the wavelength separator into one optical signal. After that, the combined optical signal is outputted to the fiber-optic link.
6) The backward optical signal carrying timing signal transferred along the opposite direction enters into the second optical splitter through the second wavelength separator/combiner. The second optical splitter inputs a portion of the backward optical signal and another portion of the backward optical signal into the control unit and the 2x2 optical switch respectively.
7) The control unit determines the time t₂ as the next time to set the 2x2 optical switch to state II based on the time t₂ when it detected the backward optical signal and the transfer direction of the backward optical signal. T₂₁ <t₂+T-tₛ. When the set time t₂₁ is reached, the 2×2 optical switch is set and maintained in state II to make the backward optical signal carrying timing signal enter into the wavelength combiner through the 2x 2 optical switch.
8) The wavelength combiner combines the backward optical signal passed through the 2x2 optical switch and the other optical signal outputted by the other splitting port of the first wavelength separator/combiner into one optical signal, then the combined optical signal is inputted into the unidirectional optical amplifier to perform optical amplification.
9) The optical signal amplified and outputted by the unidirectional optical amplifier is again split into a backward optical signal carrying timing signal and other optical signal transferred along unidirectional transmission wavelength channel through the wavelength separator. The backward optical signal carrying timing signal passes through the2x2 optical switch, which is still maintained in state II, and enters into the first optical splitter. After that, the backward optical signal carrying timing signal is outputted to the fiber-optic link by the first wavelength separator/combiner.

With mature optical communication devices, the present invention uses commercial unidirectional optical amplifier to perform optical amplification of the time signal transferred bidirectionally over a single fiber with the same wavelength, so as to best ensure the bidirectional symmetry of time delay of the BTDM-SFSW time transfer link and effectively avoid the influence of multiple amplifications of noises such as Rayleigh scattering on the time transfer performance of the fiber-optic. Besides, the invention can also be compatible with the existing fiber-optic amplification technology and support high-precision fiber-optic time transfer based on the fiber-optic communication network.

### Brief description of the drawings

Figure 1 is a schematic diagram of the embodiments of the present invention.
Figure 2 is a schematic diagram of the bidirectional amplification process, where FIG 2(a) is the amplification process of the optical signal transferred in the same direction with unidirectional transmission wavelength channel, and FIG 2(b) is the amplification process of the optical signal transferred in the opposite direction with unidirectional transmission wavelength channel.

### Detailed descriptions of the embodiments

In combination with drawings and an embodiment hereunder provided, the present invention will be further expounded. The embodiment provides detailed implementations and procedures thereof, which are not meant to limit the scope of the present invention.

In this embodiment, the transmission direction of the unidirectional transmission wavelength channel is from A to B. In the bidirectional time transfer wavelength channel, the transferred timing signal is 1PPS, the transfer direction of the optical signal I carrying 1PPS is from A to B, that is, a positive direction, and the transfer direction of the optical signal II carrying 1PPS is from B to A, that is, an opposite direction. The optical signal I and the optical signal II are transferred through the link at different times. In the embodiment, the 2x2 optical switch uses a mechanical optical switch with a switching time of milliseconds, and the unidirectional optical amplifier uses a commercial unidirectional EDFA.

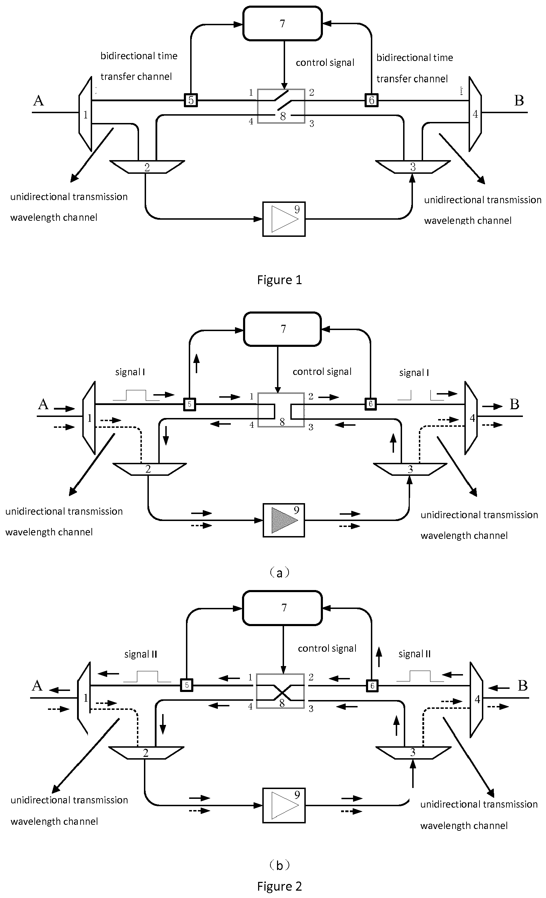

The optical amplification process of signal transferred from A to B is shown in FIG 2(a). The optical signal I transferred from A to B is split into an optical signal I carrying 1PPS and wavelength channel 1 of other unidirectional transmission through the first wavelength separator/combiner 1. The first optical splitter 5 with a splitting ratio of 1:9, inputs 10% of the optical signal I carrying 1PPS and 90% of the optical signal I carrying 1PPS into the control unit7 and the 2x2 optical switch 8, respectively. The control unit 7 resets the state of the timer to 0.9 s when it detects the optical signal I, and sets the 2x2 optical switch 8 to state I according to the input port where the optical signal I is detected. When the time expires, the 2x2 optical switch is set and maintained in state I by the controller to make the optical signal I carrying 1PPS pass through the port 1-4 of the 2x2 optical switch 8, the wavelength combiner 2, the unidirectional optical amplifier 9, the wavelength separator 3, the port 3-2 of the 2x2 optical switch 8, the second optical splitter 6 and the second wavelength separator/combiner 4 in turn. After that, this optical signal I carrying 1PPS is outputted to fiber-optic link by the combining port combining port of the second wavelength separator/combiner 4.

The optical amplification process of signal transferred from B to A is shown in FIG 2(b). The optical signal II transferred from B to A carrying 1PPSenters into the second optical splitter 6 with a splitting ratio of 1:9 via the second wavelength separator/combiner4.The second optical splitter 6 inputs 10% of the optical signal II and 90% of the optical signal II into the control unit7 and the 2x2 optical switch 8 respectively. The control unit 7 resets the timing time of the timer 2 to 0.9 s when it detects the optical signal II, and sets the 2x2 optical switch 8 to state II according to the input port where the optical signal II is detected. When the timer expires, the 2x2 optical switch is set and maintained in state II by the controller to make the optical signal II carrying 1PPS pass through the port 2-4 of the 2x2 optical switch 8, the wavelength combiner 2, the unidirectional optical amplifier 9, the wavelength separator 3, the port 3-1 of the 2x2 optical switch 8, the first optical splitter 5 and the first wavelength separator/combiner 1 in turn. After that, this optical signal II carrying 1PPS is outputted to fiber-optic link by the combining port combining port of the first wavelength separator/combiner 1.

While bidirectionally amplifying the wavelength channel for time transfer, the other optical signals transferred from A to B along the unidirectional transmission wavelength channels and outputted from the first wavelength separator/combiner 1 passes through the wavelength combiner 2, the unidirectional optical amplifier 9, the wavelength separator 3 and the second wavelength separator/combiner4in turn. After that, these other optical signals are outputted to fiber-optic link by the second wavelength separator/combiner4, as shown in FIG. 2(a) and 2(b).

## Claims

1. A device for bidirectional optical amplification in high-precision fiber-optic time transfer, comprising a first wavelength separator/combiner (1), a wavelength combiner (2), a wavelength separator (3), a second wavelength separator/combiner (4), a first optical splitter (5), a second optical splitter (6), a control unit (7), a 2x2 optical switch (8) and a unidirectional optical amplifier (9);
The combining port of the first wavelength separator/combiner (1) is connected to a fiber-optic link, one splitting port is connected to the splitting port of the wavelength channel corresponding to the wavelength combiner (2) via unidirectional transmission wavelength channel, and the other splitting port is connected to the junction of the first optical splitter (5) via bidirectional transmission wavelength channel;
The combining port of the wavelength combiner (2) is connected to the input port of the unidirectional optical amplifier (9), and the output port of the unidirectional optical amplifier (9) is connected to the combining port of the wavelength separator (3);
The combining port of the second wavelength separator/combiner (4) is connected to an other fiber-optic link, one splitting port is connected to the splitting port of the wavelength channel corresponding to the wavelength separator (3) via unidirectional transmission wavelength channel, and the other splitting port is connected to the junction of the second optical splitter (6) via bidirectional transmission wavelength channel;
The input ports of the control unit (7) are respectively connected to the shunt terminal of the first optical splitter (5) and the shunt terminal of the second optical splitter (6), and the control output port of the control unit (7) is connected to the control input port of the 2x2 optical switch (8);
The port 1 of the 2x2 optical switch (8) is connected to the other shunt terminal of the first optical splitter (5), the port 2 of the 2x2 optical switch (8) is connected to the other shunt terminal of the second optical splitter (6), the port 3 of the 2x2 optical switch (8) is connected to the other splitting port of the wavelength separator (3), and the port 4 of the 2x2 optical switch (8) is connected to the other splitting port of the wavelength combiner (2).

2. The device of claim 1, wherein an optical signal inputted from the combining port of the first wavelength separator/combiner (1) is split into a forward optical signal carrying timing signal (I), which is transferred along bidirectional time transfer channel, and an other optical signal, which is transferred along unidirectional transmission wavelength channel; the forward optical signal carrying timing signal (I) is split into two parts by the first optical splitter (5), one part enters the control unit (7), according to which the control unit (7) is configured to confirm time t₁₁ and set the state of the 2x2 optical switch to be I. The other part of forward optical signal carrying timing signal (I) is made to pass through the port 1 of the 2x2 optical switch (8), the port 4 of the 2x2 optical switch (8), the wavelength combiner (2), the unidirectional optical amplifier (9), the wavelength separator (3), the port 3 of the 2x2 optical switch (8), the port 2 of the 2x2 optical switch (8), the second optical splitter (6) and the second wavelength separator/combiner (4) to be outputted to the other fiber-optic link by the combining port of the second wavelength separator/combiner (4). And, wherein, a backward optical signal carrying timing signal(II) inputted from the combining port of the second wavelength separator/combiner (4) is transferred along the bidirectional time transfer channel and split into two parts by the second optical splitter (6), one part enters the control unit (7), according to which the control unit (7) is configured to determine time t₂₁ and set the state of the 2x2 optical switch to be II. The other part of backward optical signal carrying timing signal (II) is made to pass through the port 2 of the 2x2 optical switch (8), the port 4 of the 2x2 optical switch (8), the wavelength combiner (2), the unidirectional optical amplifier (9), the wavelength separator (3), the port 3 of the 2x2 optical switch (8), the port 1 of the 2x2 optical switch (8), the first optical splitter (5) and the first wavelength separator/combiner (1) to be outputted to the other fiber-optic link by the combining port of the first wavelength separator/combiner (1). The other optical signals transmitted along unidirectional transmission wavelength channel are made to pass through the wavelength combiner wavelength combiner (2), the unidirectional optical amplifier (9), the wavelength separator (3), and the second wavelength separator/combiner (4) to be outputted to the other fiber-optic link by the combining port of the second wavelength separator/combiner (4).

3. A device of claim 2, wherein the state I of the 2x2 optical switch (8) is when the port 1 and the port 4 of the 2x2 optical switch (8) are connected and the port 2 and 3 of the 2x2 optical switch (8) are connected. The state II of the 2x2 optical switch (8) is when the port 1 and the port 3 of the 2x2 optical switch (8) are connected and the port 2 and 4 of the 2x2 optical switch (8) are connected.

4. A method for optical amplification in high-precision bidirectional fiber-optic time transfer in the device of claims 1-3, wherein a bidirectional time transfer channel is selected from fiber-optic transfer channel through the first wavelength separator/combiner (1) for a forward optical signal or the second wavelength separator/combiner (4) for a backward optical signal, wherein the forward optical signal is split into an forward optical signal carrying signal (I) and other optical signal by the first wavelength separator/combiner (1) wherein the method comprises the steps of: controlling a 2×2 optical switch (8) so that the optical signals carrying timing signal (I ,II) transferred along two opposite directions in the bidirectional time transmission channel are made to enter into the unidirectional optical amplifier (9) along with the other optical signals split by the first wavelength separator/combiner (1) transferred along the unidirectional transmission wavelength channel at different times, thereby realizing the optical amplification of the optical signals carrying timing signal (I ,II) transferred bidirectionally over a single fiber with the same wavelength in bidirectional time division multiplexing fiber-optic time transfer link, as well as the optical amplification of other unidirectional transmission wavelength channels.

5. The method of claim 4 wherein the method additionally comprises:
1) The forward optical signal is split into a forward optical signal carrying timing signal (I) and the other optical signal, which is transferred along unidirectional transmission wavelength channel by the first wavelength separator/combiner (1). Then the forward optical signal (I) is inputted into the first optical splitter (5), and the other optical signal transferred along unidirectional transmission wavelength channel is inputted into the corresponding wavelength input port of the wavelength combiner wavelength combiner (2).
2) A portion of the forward optical signal (I) is inputted into the control unit (7) and another portion of the forward optical signal (I) is inputted into 2x2 optical switch (8) by the first optical splitter (5).
3) The control unit (7) determines the time t₁₁ as the next time to set the 2x2 optical switch to state I based on the time t₁ when it detected the forward optical signal (I) and the transfer direction of the forward optical signal (I). t₁₁ < t₁+T-tₛ, where T is the period of the transferred timing signal, and tₛ is the switching time of the optical switch. When the set time t₁₁ is reached, the 2x2 optical switch is set and maintained in state I to make the forward optical signal (I) carrying timing signal enter into the wavelength combiner wavelength combiner (2) through the 2x2 optical switch.
4) The wavelength combiner wavelength combiner combines the forward optical signal (I) passed through the 2x2 optical switch and the other optical signal outputted by the other splitting port of the first wavelength separator/combiner (1) into one optical signal, then the combined optical signal is inputted into the unidirectional optical amplifier (9) to perform optical amplification.
5) The optical signal amplified and outputted by the unidirectional optical amplifier is again split into a forward optical signal carrying timing signal (I) and other optical signal transferred along unidirectional transmission wavelength channel through the wavelength separator (3). The forward optical signal carrying timing signal (I) passes through the2x2 optical switch, which is still maintained in state I, and the second optical splitter (6). Then the forward optical signal enters into the second wavelength separator/combiner (4), followed by being combined with other optical signal outputted from the wavelength separator (3) into one optical signal. After that, the combined optical signal is outputted to the fiber-optic link.
6) The backward optical signal carrying timing signal (II) transferred along the opposite direction enters into the second optical splitter (6) through the second wavelength separator/combiner (4). The second optical splitter (6) inputs a portion of the backward optical signal(II) and another portion of the backward optical signal (II) into the control unit and the 2x2 optical switch respectively.
7) The control unit determines the time t₂ as the next time to set the 2x2 optical switch to state II based on the time t₂ when it detected the backward optical signal (II) and the transfer direction of the backward optical signal (II). T₂₁ < t₂+T-tₛ. When the set time t₂₁ is reached, the 2x2 optical switch is set and maintained in state II to make the backward optical signal carrying timing signal enter into the wavelength combiner wavelength combiner(2) through the 2x 2 optical switch.
8) The wavelength combiner wavelength combiner combines the backward optical signal (II) passed through the 2x2 optical switch and the other optical signal outputted by the other splitting port of the first wavelength separator/combiner (1) into one optical signal, then the combined optical signal is inputted into the unidirectional optical amplifier to perform optical amplification.
9) The optical signal amplified and outputted by the unidirectional optical amplifier is again split into a backward optical signal carrying timing signal (II) and other optical signal transferred along unidirectional transmission wavelength channel through the wavelength separator. The backward optical signal carrying timing signal (II) passes through the2x2 optical switch, which is still maintained in state II, and enters into the first optical splitter (5). After that, the backward optical signal carrying timing signal is outputted to the fiber-optic link by the first wavelength separator/combiner (1).

## Patentansprüche

1. Vorrichtung zur bidirektionalen optischen Verstärkung bei der hochpräzisen faseroptischen Zeitübertragung, umfassend einen ersten Wellenlängentrenner/- kombinierer (1), einen Wellenlängenkombinierer (2), einen Wellenlängentrenner (3), einen zweiten Wellenlängentrenner/-kombinierer (4), einen ersten optischen Teiler (5), einen zweiten optischen Teiler (6), eine Steuereinheit (7), einen 2x2 optischen Schalter (8) und einen unidirektionalen optischen Verstärker (9);
Der kombinierende Port des ersten Wellenlängentrenners/-kombinierers (1) ist mit einer faseroptischen Verbindung verbunden, ein aufteilender Port ist über einen unidirektionalen Übertragungswellenlängenkanal mit dem aufteilenden Port des Wellenlängenkanals verbunden, der mit dem Wellenlängenkombinierer (2) korrespondiert, und der andere aufteilende Port ist über einen bidirektionalen Übertragungswellenlängenkanal mit dem Anschluss des ersten optischen Teilers (5) verbunden;
Der kombinierende Port des Wellenlängenkombinierers (2) ist mit dem Eingangsport des unidirektionalen optischen Verstärkers (9) verbunden, und der Ausgangsport des unidirektionalen optischen Verstärkers (9) ist mit dem kombinierenden Port des Wellenlängentrenners (3) verbunden;
Der kombinierende Port des zweiten Wellenlängentrenners/-kombinierers (4) ist mit einer anderen faseroptischen Verbindung verbunden, ein aufteilender Port ist über einen unidirektionalen Übertragungswellenlängenkanal mit dem aufteilenden Port des Wellenlängenkanals verbunden, der mit dem Wellenlängentrenner (3) korrespondiert, und der andere aufteilende Port ist über einen bidirektionalen Übertragungswellenlängenkanal mit dem Anschluss des zweiten optischen Teilers (6) verbunden;
Die Eingangsports der Steuereinheit (7) sind jeweils mit dem Shunt-Anschluss des ersten optischen Teilers (5) und dem Shunt-Anschluss des zweiten optischen Teilers (6) verbunden, und der Steuerausgangsport der Steuereinheit (7) ist mit dem Steuereingangsport des 2x2 optischen Schalters (8) verbunden;
Der Port 1 des 2x2 optischen Schalters (8) ist mit dem anderen Shunt-Anschluss des ersten optischen Teilers (5) verbunden, der Port 2 des 2x2 optischen Schalters (8) ist mit dem anderen Shunt-Anschluss des zweiten optischen Teilers (6) verbunden, der Port 3 des 2x2 optischen Schalters (8) ist mit dem anderen aufteilenden Port des Wellenlängentrenners (3) verbunden, und der Port 4 des 2x2 optischen Schalters (8) ist mit dem anderen aufteilenden Port des Wellenlängenkombinierers (2) verbunden.

2. Vorrichtung nach Anspruch 1, bei der ein optisches Signal, das vom kombinierenden Port des ersten Wellenlängentrenners/-kombinierers (1) eingegeben wird, in ein optisches Vorwärtssignal, das ein Zeitsteuerungssignal (I) trägt, das entlang eines bidirektionalen Zeitübertragungskanals übertragen wird, und ein anderes optisches Signal, das entlang des unidirektionalen Übertragungswellenlängenkanals übertragen wird, aufgeteilt wird; wobei das optische Vorwärtssignal, das das Zeitsteuerungssignal (I) trägt, durch den ersten optischen Teiler (5) in zwei Teile aufgeteilt wird, wobei ein Teil die Steuereinheit (7) erreicht, gemäß dem die Steuereinheit (7) konfiguriert wird, um die Zeit t₁₁ zu bestätigen und den Zustand des 2x2 optischen Schalters auf I zu setzen. Der andere Teil des optischen Vorwärtssignals, das das Zeitsteuersignal (I) trägt, wird durch den Port 1 des 2x2 optischen Schalters (8), den Port 4 des 2x2 optischen Schalters (8), den Wellenlängenkombinierer (2), den unidirektionalen optischen Verstärker (9), den Wellenlängentrenner (3), den Port 3 des 2x2 optischen Schalters (8), den Port 2 des 2x2 optischen Schalters (8), den zweiten optischen Teilers (6) und den zweiten Wellenlängentrenner/-kombinierer (4) geleitet, um über den kombinierenden Port des zweiten Wellenlängentrenners/-kombinierers (4) an die andere faseroptische Verbindung ausgegeben zu werden.
Und wobei ein optisches Rückwärtssignal, das ein Zeitsteuersignal (II) trägt und von dem kombinierenden Port des zweiten Wellenlängentrenners/-Kombinierers (4) eingegeben wird, entlang des bidirektionalen Zeitübertragungskanals übertragen und durch den zweiten optischen Teiler (6) in zwei Teile geteilt wird, wobei ein Teil die Steuereinheit (7) erreicht, gemäß dem die Steuereinheit (7) konfiguriert wird, um die Zeit t₂₁ zu bestimmen und den Zustand des 2x2 optischen Schalters auf II zu setzen. Der andere Teil des optischen Rückwärtssignals, das das Zeitsignal (II) trägt, wird durch den Port 2 des 2x2 optischen Schalters (8), den Port 4 des 2x2 optischen Schalters (8), den Wellenlängenkombinierer (2), den unidirektionalen optischen Verstärker (9), den Wellenlängentrenner (3) geleitet, den Port 3 des 2x2 optischen Schalters (8), den Port 1 des 2x2 optischen Schalters (8), den ersten optischen Teiler (5) und den ersten Wellenlängentrenner/-kombinierer (1) geleitet, um über den kombinierenden Port des ersten Wellenlängentrenners/-kombinierers (1) an die andere faseroptische Verbindung ausgegeben zu werden.
Die anderen optischen Signale, die entlang eines unidirektionalen Übertragungswellenlängenkanals übertragen werden, werden durch den Wellenlängenkombinierer (2), den unidirektionalen optischen Verstärkers (9), den Wellenlängentrenner (3) und den zweiten Wellenlängentrenner/-kombinierer (4) geleitet, um über den Kombinationsanschluss des zweiten Wellenlängentrenner/- kombinierers (4) an die andere faseroptische Verbindung ausgegeben zu werden.

3. Vorrichtung nach Anspruch 2, wobei der Zustand I des 2x2 optischen Schalters (8) vorliegt, wenn der Port 1 und der Port 4 des 2x2 optischen Schalters (8) verbunden sind und der Port 2 und 3 des 2x2 optischen Schalters (8) verbunden sind. Der Zustand II des optischen Schalters 2x2 (8) liegt vor, wenn der Port 1 und der Port 3 des 2x2 optischen Schalters (8) verbunden sind und die Ports 2 und 4 des 2x2 optischen Schalters (8) verbunden sind.

4. Verfahren zur optischen Verstärkung bei der hochpräzisen bidirektionalen faseroptischen Zeitübertragung in der Vorrichtung nach den Ansprüchen 1-3, wobei ein bidirektionaler Zeitübertragungskanal ausgewählt wird aus faseroptischem Übertragungskanal durch den ersten Wellenlängentrenner/-kombinierer (1) für ein optisches Vorwärtssignal oder den zweiten Wellenlängentrenner/-kombinierer (4) für ein optisches Rückwärtssignal, wobei das optische Vorwärtssignal durch den ersten Wellenlängentrenner/-kombinierer (1) in ein optisches Vorwärtssignal, das das Signal (I) trägt, und ein anderes optisches Signal aufgeteilt wird, wobei das Verfahren die folgenden Schritte umfasst:
Steuern eines 2x2 optischen Schalters (8), so dass die optischen Signale, die das Zeitsteuerungssignal (I, II) tragen und entlang zweier entgegengesetzter Richtungen in dem bidirektionalen Zeitübertragungskanal übertragen werden, in den unidirektionalen optischen Verstärker (9) zusammen mit den anderen optischen Signalen, die durch den ersten Wellenlängentrenner/-kombinierer (1) geteilt und entlang des unidirektionalen Übertragungswellenlängenkanals zu unterschiedlichen Zeiten übertragen werden, eintreten, wodurch die optische Verstärkung der optischen Signale, die das Zeitsteuersignal (I, II) tragen und bidirektional über eine einzige Faser mit derselben Wellenlänge in einer bidirektionalen Zeitmultiplex-Faserzeitübertragungsverbindung übertragen werden, sowie das optische Verstärken anderer unidirektionaler Übertragungswellenlängenkanäle realisiert wird.

5. Die Methode nach Anspruch 4, wobei die Methode zusätzlich umfasst:
1) Das optische Vorwärtssignal wird in ein optisches Vorwärtssignal, das ein Zeitsteuerungssignal (I) trägt, und das andere optische Signal, das durch den ersten Wellenlängentrenner/-kombinierer (1) entlang des unidirektionalen Übertragungswellenlängenkanals übertragen wird, aufgeteilt. Dann wird das optische Vorwärtssignal (I) in den ersten optischen Teiler (5) eingegeben, und das andere optische Signal, das entlang des unidirektionalen Übertragungswellenlängenkanals übertragen wird, wird in den korrespondierenden Wellenlängeneingangsport des Wellenlängenkombinierers (2) eingegeben.
2) Ein Teil des optischen Vorwärtssignals (I) wird in die Steuereinheit (7) eingegeben und ein anderer Teil des optischen Vorwärtssignals (I) wird über den ersten optischen Teiler (5) in den 2x2 optischen Schalter (8) eingegeben.
3) Die Steuereinheit (7) bestimmt die Zeit t₁₁ als die nächste Zeit, um den 2x2 optischen Schalter in den Zustand I zu setzen, basierend auf der Zeit t₁, wenn sie das optische Vorwärtssignal (I) und die Übertragungsrichtung des optischen Vorwärtssignals (I) detektiert hat. t₁₁<t₁+T-tₛ, wobei T die Periode des übertragenen Zeitsteuerungssignals und ts die Schaltzeit des optischen Schalters ist. Wenn die gesetzte Zeit t₁₁ erreicht ist, wird der 2x2 optische Schalter gesetzt und im Zustand I gehalten, um das optische Vorwärtssignal (I), das das Zeitsteuerungssignal trägt, über den 2x2 optischen Schalter in den Wellenlängenkombinierer (2) einzugeben.
4) Der Wellenlängenkombinierer kombiniert das optische Vorwärtssignal (I), das durch den 2x2 optischen Schalter geleitet wird, und das andere optische Signal, das vom anderen Teilungsport des ersten Wellenlängentrenners/-kombinierers (1) ausgegeben wird, zu einem optischen Signal, dann wird das kombinierte optische Signal in den unidirektionalen optischen Verstärker (9) eingegeben, um eine optische Verstärkung durchzuführen.
5) Das optische Signal, das vom unidirektionalen optischen Verstärker verstärkt und ausgegeben wird, wird durch den Wellenlängentrenner (3) wiederum in ein optisches Vorwärtssignal, das ein Zeitsteuerungssignal (I) trägt, und ein anderes optisches Signal, das entlang des unidirektionalen Übertragungswellenlängenkanals übertragen wird, aufgeteilt. Das optische Vorwärtssignal, das das Zeitsignal (I) trägt, durchläuft den 2x2 optischen Schalter, der immer noch im Zustand I gehalten wird, und den zweiten optischen Teiler (6). Dann tritt das optische Vorwärtssignal in den zweiten Wellenlängentrenner/-kombinierer (4) ein, gefolgt von der Kombination mit einem anderen optischen Signal, das vom Wellenlängentrenner (3) ausgegeben wird, zu einem optischen Signal. Danach wird das kombinierte optische Signal an die faseroptische Verbindung ausgegeben.
6) Das optische Rückwärtssignal, das das Zeitsteuerungssignal (II) trägt und in der entgegengesetzten Richtung übertragen wird, tritt durch den zweiten Wellenlängentrenner/-kombinierer (4) in den zweiten optischen Teiler (6) ein. Der zweite optische Teiler (6) gibt einen Teil des optischen Rückwärtssignals (II) und einen anderen Teil des optischen Rückwärtssignals (II) in die Steuereinheit bzw. den 2x2 optischen Schalter ein.
7) Die Steuereinheit bestimmt die Zeit t₂ als die nächste Zeit, um den 2x2 optischen Schalter in den Zustand II zu setzen, basierend auf der Zeit t₂, wenn sie das optische Rückwärtssignal (II) und die Übertragungsrichtung des optischen Rückwärtssignals (II) detektiert hat. T₂₁<t₂+T-tₛ. Wenn die gesetzte Zeit t₂₁ erreicht ist, wird der 2x2 optische Schalter gesetzt und im Zustand II gehalten, um das optische Rückwärtssignal, das das Zeitsignal trägt, über den 2x2 optischen Schalter in den Wellenlängenkombinierer (2) einzugeben.
8) Der Wellenlängenkombinierer kombiniert das optische Rückwärtssignal (II), das durch den 2x2 optischen Schalter geleitet wird, und das andere optische Signal, das vom anderen Teilungsport des ersten Wellenlängentrenners/- kombinierers (1) ausgegeben wird, zu einem optischen Signal, dann wird das kombinierte optische Signal in den unidirektionalen optischen Verstärker eingegeben, um die optische Verstärkung durchzuführen.
9) Das optische Signal, das vom unidirektionalen optischen Verstärker verstärkt und ausgegeben wird, wird durch den Wellenlängentrenner wiederum in ein optisches Rückwärtssignal, das ein Zeitsteuerungssignal (II) trägt, und ein anderes optisches Signal, das entlang des unidirektionalen Übertragungswellenlängenkanals übertragen wird, aufgeteilt. Das optische Rückwärtssignal, das das Zeitsignal (II) trägt, durchläuft den 2x2 optischen Schalter, der immer noch im Zustand II gehalten wird, und tritt in den ersten optischen Teiler (5) ein. Danach wird das optische Rückwärtssignal, das das Zeitsignal trägt, durch den ersten Wellenlängentrenner/-kombinierer (1) an die faseroptische Verbindung ausgegeben.

## Revendications

1. Dispositif d'amplification optique bidirectionnelle dans un transfert temporel sur fibre optique de haute précision, comprenant un premier séparateur/combineur de longueurs d'onde (1), un combineur de longueurs d'onde (2), un séparateur de longueurs d'onde (3), un deuxième séparateur/combineur de longueurs d'onde (4), un premier séparateur optique (5), un deuxième séparateur optique (6), une unité de commande (7), un commutateur optique 2×2 (8) et un amplificateur optique unidirectionnel (9);
le port de combinaison du premier séparateur/ combineur de longueurs d'onde (1) est connecté à une liaison par fibre optique, un port de séparation est connecté au port de séparation du canal de longueur d'onde correspondant au combineur de longueurs d'onde (2) par le biais d'un canal de longueur d'onde de transmission unidirectionnel, et l'autre port de séparation est connecté à la jonction du premier séparateur optique (5) par le biais d'un canal de longueur d'onde de transmission bidirectionnel;
le port de combinaison du combineur de longueurs d'onde (2) est connecté au port d'entrée de l'amplificateur optique unidirectionnel (9), et le port de sortie de l'amplificateur optique unidirectionnel (9) est connecté au port de combinaison du séparateur de longueurs d'onde (3);
le port de combinaison du deuxième séparateur/ combineur de longueurs d'onde (4) est connecté à une autre liaison par fibre optique, un port de séparation est connecté au port de séparation du canal de longueur d'onde correspondant au séparateur de longueurs d'onde (3) par le biais d'un canal de longueur d'onde de transmission unidirectionnel, et l'autre port de séparation est connecté à la jonction du deuxième séparateur optique (6) par le biais d'un canal de longueur d'onde de transmission bidirectionnel;
les ports d'entrée de l'unité de commande (7) sont respectivement connectés à la borne de dérivation du premier séparateur optique (5) et la borne de dérivation du deuxième séparateur optique (6), et le port de sortie de commande de l'unité de commande (7) est connecté au port d'entrée de commande du commutateur optique 2×2 (8);
le port 1 du commutateur optique 2x2 (8) est connecté à l'autre borne de dérivation du premier séparateur optique (5), le port 2 du commutateur optique 2x2 (8) est connecté à l'autre borne de dérivation du deuxième séparateur optique (6), le port 3 du commutateur optique 2×2 (8) est connecté à l'autre port de séparation du séparateur de longueurs d'onde (3), et le port 4 du commutateur optique 2x2 (8) est connecté à l'autre port de séparation du combineur de longueurs d'onde (2).

2. Dispositif de la revendication 1, dans lequel un signal optique entré depuis le port de combinaison du premier séparateur/combineur de longueurs d'onde (1) est séparé en un signal optique vers l'avant portant un signal de synchronisation (I), qui est transféré le long d'un canal de transfert temporel bidirectionnel, et un autre signal optique, qui est transféré le long d'un canal de longueur d'onde de transmission unidirectionnel; le signal optique vers l'avant portant un signal de synchronisation (I) est séparé en deux parties par le premier séparateur optique (5), une partie entre dans l'unité de commande (7), moyennant quoi l'unité de commande (7) est configurée pour confirmer un temps t₁₁ et régler l'état du commutateur optique 2×2 sur I; l'autre partie du signal optique vers l'avant portant un signal de synchronisation (I) est passée à travers le port 1 du commutateur optique 2x2 (8), le port 4 du commutateur optique 2x2 (8), le combineur de longueurs d'onde (2), l'amplificateur optique unidirectionnel (9), le séparateur de longueurs d'onde (3), le port 3 du commutateur optique 2x2 (8), le port 2 du commutateur optique 2x2 (8), le deuxième séparateur optique (6) et le deuxième séparateur/combineur de longueurs d'onde (4) pour être délivré à l'autre liaison par fibre optique par le port de combinaison du deuxième séparateur/combineur de longueurs d'onde (4);
et dans lequel un signal optique vers l'arrière portant un signal de synchronisation (II) entré depuis le port de combinaison du deuxième séparateur/combineur de longueurs d'onde (4) est transféré le long du canal de transfert temporel bidirectionnel et séparé en deux parties par le deuxième séparateur optique (6), une partie entre dans l'unité de commande (7), moyennant quoi l'unité de commande (7) est configurée pour déterminer un temps t₂₁ et régler l'état du commutateur optique 2×2 sur II;
l'autre partie du signal optique vers l'arrière portant un signal de synchronisation (II) est passée à travers le port 2 du commutateur optique 2×2 (8), le port 4 du commutateur optique 2x2 (8), le combineur de longueurs d'onde (2), l'amplificateur optique unidirectionnel (9), le séparateur de longueurs d'onde (3), le port 3 du commutateur optique 2×2 (8), le port 1 du commutateur optique 2×2 (8), le premier séparateur optique (5) et le premier séparateur/combineur de longueurs d'onde (1) pour être délivré à l'autre liaison par fibre optique par le port de combinaison du premier séparateur/combineur de longueurs d'onde (1);
les autres signaux optiques transmis le long d'un canal de longueur d'onde de transmission unidirectionnel sont passés à travers le combineur de longueurs d'onde combineur de longueurs d'onde (2), l'amplificateur optique unidirectionnel (9), le séparateur de longueurs d'onde (3), et le deuxième séparateur/combineur de longueurs d'onde (4) pour être délivré à l'autre liaison par fibre optique par le port de combinaison du deuxième séparateur/combineur de longueurs d'onde (4).

3. Dispositif de la revendication 2, dans lequel l'état I du commutateur optique 2x2 (8) apparaît quand le port 1 et le port 4 du commutateur optique 2x2 (8) sont connectés et les ports 2 et 3 du commutateur optique 2x2 (8) sont connectés; l'état II du commutateur optique 2×2 (8) apparaît quand le port 1 et le port 3 du commutateur optique 2×2 (8) sont connectés et les ports 2 et 4 du commutateur optique 2×2 (8) sont connectés.

4. Procédé d'amplification optique dans un transfert temporel sur fibre optique bidirectionnelle de haute précision dans le dispositif des revendications 1 à 3,
dans lequel un canal de transfert temporel bidirectionnel est sélectionné à partir d'un canal de transfert sur fibre optique à travers le premier séparateur/combineur de longueurs d'onde (1) pour un signal optique vers l'avant ou le deuxième séparateur/ combineur de longueurs d'onde (4) pour un signal optique vers l'arrière, dans lequel le signal optique vers l'avant est séparé en un signal optique vers l'avant portant un signal (I) et un autre signal optique par le premier séparateur/combineur de longueurs d'onde (1),
le procédé comprenant les étapes de:
commande d'un commutateur optique 2×2 (8) de telle sorte que les signaux optiques portant un signal de synchronisation (I, II) transférés le long de deux directions opposées dans le canal de transmission temporelle bidirectionnel soient entrés dans l'amplificateur optique unidirectionnel (9) avec les autres signaux optiques séparés par le premier séparateur/combineur de longueurs d'onde (1) transférés le long du canal de longueur d'onde de transmission unidirectionnel à différents moments, pour réaliser ainsi l'amplification optique des signaux optiques portant un signal de synchronisation (I, II) transférés bidirectionnellement sur une seule fibre avec la même longueur d'onde dans une liaison de transfert temporel sur fibre optique à multiplexage par répartition dans le temps bidirectionnelle, ainsi que l'amplification optique d'autres canaux de longueur d'onde de transmission unidirectionnels.

5. Procédé de la revendication 4, le procédé comprenant également:
1) le signal optique vers l'avant est séparé en un signal optique vers l'avant portant un signal de synchronisation (I) et l'autre signal optique, qui est transféré le long du canal de longueur d'onde de transmission unidirectionnel par le premier séparateur/combineur de longueurs d'onde (1); ensuite, le signal optique vers l'avant (I) est entré dans le premier séparateur optique (5), et l'autre signal optique transféré le long d'un canal de longueur d'onde de transmission unidirectionnel est entré dans le port d'entrée de longueur d'onde correspondant du combineur de longueurs d'onde combineur de longueurs d'onde (2);
2) une partie du signal optique vers l'avant (I) est entrée dans l'unité de commande (7) et une autre partie du signal optique vers l'avant (I) est entrée dans le commutateur optique 2x2 (8) par le premier séparateur optique (5);
3) l'unité de commande (7) détermine le temps t₁₁ comme le temps suivant pour régler le commutateur optique 2x2 sur l'état I sur la base du temps t₁ quand elle a détecté le signal optique vers l'avant (I) et la direction de transfert du signal optique vers l'avant (I) ; t₁₁ < t₁+T-tₛ, où T est la période du signal de synchronisation transféré, et tₛ est le temps de commutation du commutateur optique ; quand le temps réglé t₁₁ est atteint, le commutateur optique 2x2 est réglé et maintenu à l'état I pour faire entrer le signal optique vers l'avant (I) portant un signal de synchronisation dans le combineur de longueurs d'onde combineur de longueurs d'onde (2) par le biais du commutateur optique 2×2;
4) le combineur de longueurs d'onde combineur de longueurs d'onde combine le signal optique vers l'avant (I) passé à travers le commutateur optique 2x2 et l'autre signal optique délivré par l'autre port de séparation du premier séparateur/combineur de longueurs d'onde (1) en un signal optique, puis le signal optique combiné est entré dans l'amplificateur optique unidirectionnel (9) pour effectuer une amplification optique;
5) le signal optique amplifié et délivré par l'amplificateur optique unidirectionnel est de nouveau séparé en un signal optique vers l'avant portant un signal de synchronisation (I) et un autre signal optique transféré le long d'un canal de longueur d'onde de transmission unidirectionnel à travers le séparateur de longueurs d'onde (3); le signal optique vers l'avant portant un signal de synchronisation (I) passe à travers le commutateur optique 2x2, qui est toujours maintenu à l'état I, et le deuxième séparateur optique (6); ensuite, le signal optique vers l'avant entre dans le deuxième séparateur/combineur de longueurs d'onde (4), puis est combiné avec un autre signal optique délivré depuis le séparateur de longueurs d'onde (3) en un signal optique; après cela, le signal optique combiné est délivré à la liaison par fibre optique;
6) le signal optique vers l'arrière portant un signal de synchronisation (II) transféré le long de la direction opposée entre dans le deuxième séparateur optique (6) par le biais du deuxième séparateur/combineur de longueurs d'onde (4); le deuxième séparateur optique (6) fait entrer une partie du signal optique vers l'arrière (II) et une autre partie du signal optique vers l'arrière (II) dans l'unité de commande et le commutateur optique 2x2, respectivement;
7) l'unité de commande détermine le temps t₂ comme le temps suivant pour régler le commutateur optique 2x2 sur l'état II sur la base du temps t₂ quand elle a détecté le signal optique vers l'arrière (II) et la direction de transfert du signal optique vers l'arrière (II); T₂₁ < t₂+T-tₛ ; quand le temps réglé t₂₁ est atteint, le commutateur optique 2x2 est réglé et maintenu à l'état II pour faire entrer le signal optique vers l'arrière portant un signal de synchronisation dans le combineur de longueurs d'onde combineur de longueurs d'onde (2) par le biais du commutateur optique 2x2;
8) le combineur de longueurs d'onde combineur de longueurs d'onde combine le signal optique vers l'arrière (II) passé à travers le commutateur optique 2x2 et l'autre signal optique délivré par l'autre port de séparation du premier séparateur/combineur de longueurs d'onde (1) en un signal optique, puis le signal optique combiné est entré dans l'amplificateur optique unidirectionnel pour effectuer une amplification optique;
9) le signal optique amplifié et délivré par l'amplificateur optique unidirectionnel est de nouveau séparé en un signal optique vers l'arrière portant un signal de synchronisation (II) et un autre signal optique transféré le long d'un canal de longueur d'onde de transmission unidirectionnel par le biais du séparateur de longueurs d'onde; le signal optique vers l'arrière portant un signal de synchronisation (II) passe à travers le commutateur optique 2x2, qui est toujours maintenu à l'état II, et entre dans le premier séparateur optique (5); après cela, le signal optique vers l'arrière portant un signal de synchronisation est délivré à la liaison par fibre optique par le premier séparateur/combineur de longueurs d'onde (1).
